(19) Europäisches Patentamt
European Patent Office
Office européen des brevets

(11) EP 0 780 438 A2

(12) **EUROPÄISCHE PATENTANMELDUNG**

(43) Veröffentlichungstag: **25.06.1997 Patentblatt 1997/26**

(51) Int. Cl.6: **C08L 69/00**, C08L 51/04, C08L 25/12

(21) Anmeldenummer: **96119758.9**

(22) Anmeldetag: **10.12.1996**

(84) Benannte Vertragsstaaten: **BE DE ES FR GB IT NL**

(30) Priorität: **21.12.1995 DE 19547884**

(71) Anmelder: **BASF AKTIENGESELLSCHAFT 67056 Ludwigshafen (DE)**

(72) Erfinder:
- **Weber, Martin, Dr. 67487 Maikammer (DE)**
- **Weiss, Robert, Dr. 67281 Kirchheim (DE)**
- **Güntherberg, Norbert, Dr. 67346 Speyer (DE)**
- **Massonne, Klemens, Dr. 67368 Westheim (DE)**
- **Seibring, Joachim, Dr. 67251 Freinsheim (DE)**
- **Zimmer, Guenther, Dr. 55129 Mainz (DE)**

(54) **Formmassen auf der Basis von Polycarbonaten**

(57) Formmassen, enthaltend

A) 5 bis 97,9 Gew.-% mindestens eines Polycarbonates mit einem Molekulargewicht (Gewichtsmittelwert $M_w$) im Bereich von 10 000 bis 64 000 g/mol,

B) 1 bis 93,9 Gew.-% mindestens eines Pfropfcopolymerisates,

C) 1 bis 93,9 Gew.-% mindestens eines Copolymerisates aus

$c_1)$ mindestens einer vinylaromatischen Verbindung der allgemeinen Formel I

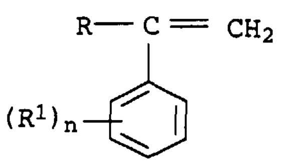

(I)

worin R ein Wasserstoffatom oder einen $C_1$- bis $C_8$-Alkylrest, $R^1$ einen $C_1$- bis $C_8$-Alkylrest und n eine ganze Zahl von 0 bis 3 bedeutet, eines $C_1$- bis $C_8$-Alkylacrylates, eines $C_1$- bis $C_8$-Alkyl-$C_1$- bis $C_8$-alkylacrylates oder deren Mischungen und

$c_2)$ Acrylnitril, $C_1$- bis $C_8$-Alkylacrylnitril oder deren Mischungen,

D) 0,01 bis 10 Gew.-% mindestens eines Polyhydroxyethers aus mindestens einem aliphatischen oder aromatischen Diol mit Epihalogenhydrin,

E) 1 bis 25 Gew.-% mindestens einer halogenfreien Phosphorverbindung und

F) 0 bis 50 Gew.-% Zusatzstoffe.

EP 0 780 438 A2

Printed by Rank Xerox (UK) Business Services
2.14.8/3.4

**Beschreibung**

Die vorliegende Erfindung betrifft Formmassen, die

A) 5 bis 97,9 Gew.-% mindestens eines Polycarbonates mit einem Molekulargewicht (Gewichtsmittelwert $M_w$) im Bereich von 10 000 bis 64 000 g/mol,

B) 1 bis 93,9 Gew.-% mindestens eines Pfropfcopolymerisates,

C) 1 bis 93,9 Gew.-% mindestens eines Copolymerisates aus

$c_{1)}$ mindestens einer vinylaromatischen Verbindung der allgemeinen Formel I

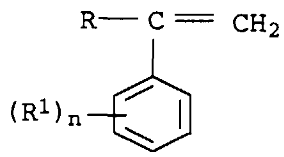

(I)

worin R ein Wasserstoffatom oder einen $C_1$- bis $C_8$-Alkylrest, $R^1$ einen $C_1$- bis $C_8$-Alkylrest und n eine ganze Zahl von 0 bis 3 bedeutet, eines $C_1$- bis $C_8$-Alkylacrylates, eines $C_1$- bis $C_8$-Alkyl-$C_1$- bis $C_8$-alkylacrylates oder deren Mischungen und

$c_{2)}$ Acrylnitril, $C_1$- bis $C_8$-Alkylacrylnitril oder deren Mischungen,

D) 0,01 bis 10 Gew.-% mindestens eines Polyhydroxyethers aus mindestens einem aliphatischen oder aromatischen Diol mit Epihalogenhydrin,

E) 0 bis 25 Gew.-% mindestens einer halogenfreien Phosphorverbindung und

F) 0 bis 50 Gew.-% Zusatzstoffe

enthalten. Darüberhinaus betrifft die vorliegende Erfindung die Verwendung dieser Formmassen zur Herstellung von Formkörpern, Folien oder Fasern sowie die Formkörper, Folien oder Fasern, die aus diesen Formmassen erhältlich sind. Ferner betrifft die vorliegende Erfindung die Verwendung von Polyhydroxyethern D als Hilfsstoff für Flammschutzmittel auf der Basis halogenfreier Phosphorverbindungen sowie derartige Flammschutzmittel.

Mischungen, die Polycarbonate, Pfropfcopolymerisate, insbesondere ABS oder ASA, sowie Copolymerisate auf der Basis von Styrol enthalten, werden für viele Anwendungen, beispielsweise im Automobilbereich oder im Haushalts- oder Sportsektor eingesetzt.

Derartige Formmassen sind für die Herstellung dünnwandiger Formteile oft nicht fließfähig genug, oder wenn hinreichend fließfähig, dann mangelt es ihnen an Wärmeformbeständigkeit. Gemäß EP-A 570 797 kann die Fließfähigkeit derartiger Formmassen verbessert werden ohne die Wärmeformbeständigkeit zu verschlechtern, wenn eine Mischung aus Polycarbonaten unterschiedlicher Viskosität eingesetzt wird. Die in der EP-A 570 797 beschriebenen Formmassen haben den Nachteil, daß sie bei tiefen Temperaturen meist nicht zäh genug sind.

Probleme bereitet ferner die Herstellung flammwidriger Formmassen. Als Flammschutzmittel werden häufig Phosphorverbindungen in Mischung mit einem Hilfsstoff eingesetzt. Aus der EP-A- 538 950 ist als Flammschutzmittel eine Mischung aus Novolak oder Polyphenylenether, Poly-p-hydroxystyrol und einer Phosphorverbindung zu entnehmen. Formkörper aus diesen Blends weisen jedoch schon bei geringer Stoßbeanspruchung Risse auf.

Bekannt war, daß Polyhydroxyether aus Bisphenol A und Epichlorhydrin mit ABS nicht mischbar und unverträglich sind. Erst wenn die Polyhydroxyether mit Styrol/Acrylnitril-Glycidylmethacrylat reagieren und ein Copolymer bilden, verfeinert sich die Morphologie der Blends und die mechanischen Eigenschaften verbessern sich (siehe Chen et al. J. Appl. Polym. Sci. 1994, 51, 955).

So wirken auch Polymere, die OH-Gruppen enthalten und mit Polyamiden reagieren, als Verträglichkeitsvermittler in Blends aus Polycarbonaten, Polyamiden, Pfropfcopolymerisaten und Copolymerisaten.

Werden OH-gruppenhaltige Polymere in Blends, die neben Polycabonaten und Pfropfcopolymerisaten Copolymere, die Anhydrid oder Imidgruppen aufweisen, eingesetzt, erhält man gemäß EP-A 483 917 Formmassen mit guter Wärmeformbeständigkeit und guter Schlagzähigkeit. Allerdings sind diese Formmassen für viele Anwendungen zu

spröde. Dies zeigt sich insbesondere bei Stoßbeanspruchung.

Aufgabe der vorliegenden Erfindung war es, Formmassen auf der Basis von Polycarbonaten, Pfropfcopolymeren und Copolymeren zu entwickeln, die neben guten Wärmeformbeständigkeiten und guten Schlagzähigkeiten eine möglichst geringe Neigung zur Rißbildung bei Stoßbeanspruchung zeigen. Daneben sollten Formmassen zur Verfügung gestellt werden, die sich gut verarbeiten lassen und die flammwidrig sind.

Komponente A

Als Komponente A enthalten die Formmassen erfindungsgemäß von 5 bis 97,9 Gew.-%, bezogen auf die Summe der Komponenten A bis F, mindestens eines Polycarbonates mit einem Molekulargewicht (Gewichtsmittelwert $M_w$, bestimmt mittels Gelpermeationschromatographie in Tetrahydrofuran gegen Polystyrolstandards) im Bereich von 10 000 bis 60 000 g/mol. Bevorzugte erfindungsgemäße Formmassen enthalten von 7,5 bis 94,5 Gew.-%, bezogen auf die Summe der Komponenten A bis F, der Komponente A. Die Polycarbonate A sind in besonders bevorzugten erfindungsgemäßen Formmassen in Mengen von 10 bis 91,9 Gew.-%, bezogen auf die Summe der Komponenten A bis F, enthalten.

Geeignete Polycarbonate A sind an sich bekannt. Sie sind z.B. entsprechend den Verfahren der DE-B- 300 266 durch Grenzflächenpolykondensation oder gemäß dem Verfahren der DE-A-1 495 730 durch Umsetzung von Diphenylcarbonat mit Bisphenolen erhältlich. Bevorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynaphthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan, 4,4-Dihydroxydiphenyl oder Dihydroxydiphenylcycloalkane, bevorzugt Dihydroxydiphenylcyclohexane oder Dihydroxycyclopentane, insbesondere 1,1-Bis-(4-hydroxyphenyl)-3,3,5-trimethylcyclohexan sowie Mischungen der vorgenannten Dihydroxyverbindungen.

Besonders bevorzugte Polycarbonate sind solche auf der Basis von Bisphenol A oder Bisphenol A zusammen mit bis zu 80 Mol-% der vorstehend genannten aromatischen Dihydroxyverbindungen.

Es können auch Copolycarbonate gemäß der US-A 3 737 409 verwendet werden; von besonderem Interesse sind dabei Copolycarbonate auf der Basis von Bisphenol A und Di-(3,5-dimethyl-dihydroxyphenyl)sulfon, die sich durch eine hohe Wärmeformbeständigkeit auszeichnen. Ferner ist es möglich, Mischungen unterschiedlicher Polycarbonate einzusetzen.

Die mittleren Molekulargewichte (Gewichtsmittelwert $M_w$, bestimmt mittels Gelpermeationschromatographie in Tetrahydrofuran gegen Polystyrolstandards) der Polycarbonate A liegen erfindungsgemäß im Bereich von 10 000 bis 64 000 g/mol. Bevorzugt liegen sie im Bereich von 15 000 bis 63 000, insbesondere im Bereich von 15 000 bis 60 000 g/mol. Dies bedeutet, daß die Polycarbonate A relative Lösungsviskositäten im Bereich von 1,1 bis 1,3, gemessen in 0,5 gew.-%iger Lösung in Dichlormethan bei 25°C bevorzugt von 1,15 bis 1,33 haben. Vorzugsweise unterscheiden sich die relativen Lösungsviskositäten der eingesetzten Polycarbonate um nicht mehr als 0,05, insbesondere nicht mehr als 0,04.

Erfindungsgemäß kann die Komponente A auch einen Mischung aus Polycarbonaten und Polycarbonaten aus Extrusionsabfällen sein, sofern deren Molekulargewicht (Gewichtsmittelwert $M_w$, bestimmt mittels Gelpermeationschromatographie in Tetrahydrofuran gegen Polystyrolstandards) ebenfalls im Bereich von 10 000 bis 64 000 g/mol liegt. Im allgemeinen unterscheiden sich die Polycarbonate aus Extrusionsabfällen von erstmals hergestellten Polycarbonaten durch ein geringfügig kleineres Molekulargewicht. Für den Unterschied der relativen Lösungsviskositäten beim Einsatz von Polycarbonaten und Polycarbonaten aus Extrusionsabfällen gilt jedoch das oben Gesagte.

Bevorzugte Mischungen enthalten von 5 bis 100, insbesondere von 10 bis 90 Gew.-%, bezogen auf $a_1$ und $a_2$, mindestens eines Polycarbonates ($a_1$) und von 0 bis 95, insbesondere von 10 bis 90 Gew.-%, bezogen auf $a_1$ und $a_2$, mindestens eines Polycarbonates aus Extrusionsabfällen ($a_2$).

Die Polycarbonate A können sowohl als Mahlgut als auch in granulierter Form eingesetzt werden.

Komponente B

In den erfindungsgemäßen Formmassen sind als weitere Komponente von 1 bis 93,9 Gew.-% Pfropfcopolymerisate B enthalten. Bevorzugte Formmassen enthalten von 2,5 bis 89,5, insbesondere von 3 bis 86,9 Gew.-% der Komponente B. Die Gewichtsprozentangaben beziehen sich dabei jeweils auf die Summe der Komponenten A bis F.

Im allgemeinen können verschiedenste Pfropfcopolymerisate verwendet werden, bevorzugt werden jedoch Pfropfcopolymerisate, deren Pfropfgrundlage $b_1$ aus einem kautschukelastischen Kern mit einer Glasübergangstemperatur von unter 10°C, bevorzugt unter 0°C, insbesondere -10°C besteht.

Dies sind z.B. Naturkautschuk, Synthesekautschuk auf der Basis konjugierter Diene oder Elastomere auf der Basis von $C_1$- bis $C_{18}$-Alkylestern der Acrylsäure, die auch weitere Comonomere enthalten können.

Bevorzugt kommen als Pfropfgrundlage $b_1$ Polybutadien oder Copolymerisate aus Polybutadien und Styrol in Betracht.

Weiterhin sind Pfropfgrundlagen $b_1$ bevorzugt, die aufgebaut sind aus

$b_{11)}$ 70 bis 99,9 Gew.-%, vorzugsweise von 90 bis 99 Gew.-% mindestens eines Alkylacrylates mit 1 bis 8 C-Atomen im Alkylrest, vorzugsweise n-Butylacrylat und/oder 2-Ethylhexylacrylat, insbesondere n-Butylacrylat als alleiniges Alkylacrylat,

$b_{12)}$ 0 bis 30 Gew.-%, insbesondere von 20 bis 30 Gew.-% eines weiteren copolymerisierbaren monoethylenisch ungesättigten Monomeren, wie Butadien, Isopren, Styrol, Acrylnitril, Methylmethacrylat und/oder Vinylmethylether und

$b_{13)}$ 0,1 bis 5 Gew.-%, vorzugsweise von 1 bis 4 Gew.-% eines copolymerisierbaren, polyfunktionellen, vorzugsweise bi- oder trifunktionellen, die Vernetzung bewirkenden Monomeren.

Als solche bi- oder polyfunktionellen Vernetzungsmonomeren $b_{13}$ eignen sich Monomere, die vorzugsweise zwei, gegebenenfalls auch drei oder mehr, zur Copolymerisation befähigten ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphthalat, Triallylcyanurat oder Triallylisocyanat. Besonders bevorzugtes Vernetzungsmonomeres ist Dihydrodicyclopentadienylacrylat:

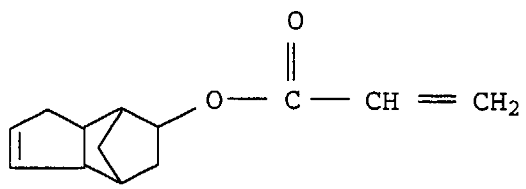

(II)

Ferner kommen Methacryloylakyloxysilane der allgemeinen Formel III

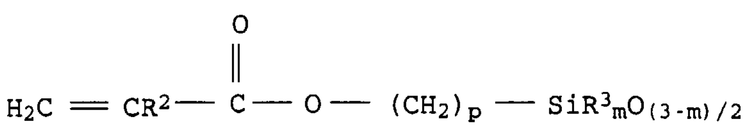

(III)

worin $R^2$ Wasserstoff oder Methyl ist, $R^3$ $C_1$- bis $C_3$-Alkyl oder Phenyl bevorzugt Methyl bedeutet, m eine ganze Zahl von 0 bis 2 und p eine ganze Zahl von 1 bis 6, bevorzugt 1 bis 4 bedeutet, in Betracht.

Der Aufbau der Pfropfauflage $b_2$ kann einstufig oder mehrstufig sein. Im allgemeinen ist er ein- oder zweistufig.

Bevorzugt wird die erste Pfropfauflage $b_{21}$ aus vinylaromatischen Verbindungen der allgemeinen Formel I

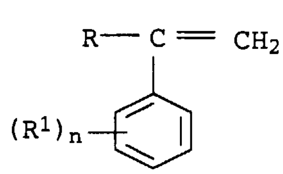

(I)

hergestellt. Darin kann R Wasserstoff oder eine $C_1$- bis $C_8$-Alkylrest, bevorzugt $C_1$- bis $C_3$-Alkyl, insbesondere Methyl darstellen. Unabhängig von R bedeutet $R^1$ einen $C_1$- bis $C_8$-Alkylrest, worunter $C_1$- bis $C_3$-Alkyl bevorzugt ist. Besonders bevorzugt ist $R^1$ Methyl.

Die Variable n bedeutet eine ganze Zahl von 0 bis 3. Bevorzugt ist n entweder 0 oder 1. Ganz besonders bevorzugt ist $b_{21}$ Styrol oder $\alpha$-Methylstyrol.

Ferner kann die erste Pfropfauflage $b_{21}$ auch aus einem $C_1$- bis $C_8$-Alkylacrylat, bevorzugt $C_1$- bis $C_4$-Alkylacrylat, insbesondere Methylacrylat, aufgebaut sein. Ebenso ist es möglich, daß $b_{21}$ aus einem $C_1$- bis $C_8$-Alkyl-$C_1$- bis $C_8$-

alkylacrylat, bevorzugt $C_1$- bis $C_4$-Alkyl-$C_1$- bis $C_4$-alkylacrylat, insbesondere Methylmethacrylat aufgebaut ist. Selbstverständlich können auch Mischungen unterschiedlicher Monomerer verwendet werden.

Die zweite Pfropfauflage $b_{22}$ ist bevorzugt aus Acrylnitril, $C_1$- bis $C_8$-Alkylacrylnitril, bevorzugt $C_1$- bis $C_4$-Alkylnitril, insbesondere Methacrylnitril oder $C_1$- bis $C_8$-Alkyl-$C_1$- bis $C_8$-alkylacrylat aufgebaut. Unter den Alkyl-alkylacrylaten sind die $C_1$- bis $C_4$-Alkyl-$C_1$- bis $C_4$-alkylacrylate bevorzugt; darunter insbesondere Methylmethacrylat. Selbstverständlich können auch Mischungen unterschiedlicher Monomerer zum Aufbau von $b_{22}$ eingesetzt werden.

Im allgemeinen sind die bevorzugten Pfropfcopolymerisate B aus 40 bis 80 Gew.-% einer Pfropfgrundlage $b_1$ und 20 bis 60 Gew.-% einer Pfropfauflage $b_2$ aufgebaut. Die bevorzugten Pfropfauflagen setzen sich in der Regel aus 50 bis 95 Gew.-% $b_{21}$ und 5 bis 50 Gew.-% $b_{22}$ zusammen.

Ist die Pfropfgrundlage $b_1$ im wesentlichen aus Butadienpolymerisaten aufgebaut, spricht man von ABS-Kautschuken. Basiert die Pfropfgrundlage auf Acrylatpolymerisaten, nennt man die Pfropfcopolymerisate ASA-Kautschuke.

Die Herstellung der Pfropfcopolymerisate B ist entweder bekannt oder sie kann nach an sich bekannten Methoden erfolgen. So kann die Pfropfcopolymerisation in Lösung, Suspension oder bevorzugt in Emulsion durchgeführt werden. Besonders bevorzugt erfolgt die Pfropfcopolymerisation in wäßriger Emulsion.

Für die Herstellung in wäßriger Emulsion können Emulgatoren wie Alkalisalze von Alkyl- oder Alkylarylsulfonsäuren, Alkylsulfate, Fettalkoholsulfonate, Salze höherer Fettsäuren mit 10 bis 30 C-Atomen oder Harzseifen verwendet werden. Vorzugsweise werden Natriumsalze von Alkylsulfonaten oder von Fettsäuren mit 10 bis 18 C-Atomen verwendet. Bevorzugt werden Emulgatoren in Mengen von 0,3 bis 5 Gew.-%, insbesondere von 1 bis 2 Gew.-%, bezogen auf das Gesamtgewicht der, die Pfropfcopolymerisate B aufbauenden, Monomeren, eingesetzt. Als Polymerisationsinitiatoren dienen insbesondere Persulfate, wie Kaliumperoxodisulfat; es sind jedoch auch Redoxsysteme geeignet, die niedrigere Polymerisationstemperaturen erlauben. Die Menge an Initiatoren (z.B. von 0,1 bis 1 Gew.-%, bezogen auf das Gesamtgewicht der für die Herstellung der Pfropfgrundlage $b_1$ verwendeten Monomeren) richtet sich in bekannter Weise nach dem gewünschten Molekulargewicht.

Als Polymerisationshilfsstoffe können Puffersubstanzen, durch welche pH-Werte von bevorzugt 6 bis 9 eingestellt werden, z.B. Natriumhydrogencarbonat oder Natriumpyrophosphat, sowie Molekulargewichtsregler, wie Mercaptane, Terpinole oder dimeres $\alpha$-Methylstyrol verwendet werden. Die Molekulargewichtsregler werden im allgemeinen in Mengen bis zu 3 Gew.-%, bezogen auf das Gesamtgewicht der für die Herstellung der Pfropfgrundlage $b_1$ verwendeten Monomeren, eingesetzt.

Für die Herstellung der Pfropfgrundlage $b_1$ wird im allgemeinen zunächst ein vernetzter Saatlatex erzeugt. Im allgemeinen hat der Saatlatex eine mittlere Teilchengröße $d_{50}$ von 20 bis 150 nm, bevorzugt von 50 bis 100 nm. Anschließend wird der Saatlatex mit weiteren Monomeren, Vernetzern, Emulgatoren, Polymerisationshilfsstoffen und Initiatoren zu der Pfropfgrundlage $b_1$ umgesetzt.

Es ist vorteilhaft, die Pfropfcopolymerisation der die Pfropfauflage $b_2$ bildenden Monomeren auf die Pfropfgrundlage $b_1$ wiederum in wäßriger Emulsion durchzuführen.

In der Regel wird die Herstellung der Pfropfauflage $b_2$ im gleichen System wie die Polymerisation der Pfropfgrundlage $b_1$ vorgenommen, wobei weiterer Emulgator und Initiator zugegeben werden kann. Diese können zwar, brauchen aber nicht mit den zur Herstellung von $b_1$ verwendeten Emulgatoren bzw. Initiatoren identisch sein. Emulgator, Initiator und Polymerisationshilfsstoffe können jeweils allein oder in Mischung zusammen mit der Emulsion der Pfropfgrundlage $b_1$ vorgelegt werden. Sie können aber auch allein oder in Mischung zusammen mit den für die Pfropfauflagen verwendeten Monomeren zur Emulsion von $b_1$ zugegeben werden.

Die Pfropfung der Pfropfgrundlage mit den die jeweiligen Pfropfauflagen bildenden Monomeren kann, wie bereits erwähnt, einstufig oder mehrstufig durchgeführt werden. So können die Monomeren der jeweiligen Pfropfauflage auf einmal, absatzweise in mehreren Stufen oder kontinuierlich zur Pfropfgrundlage bzw. dem Produkt aus Pfropfgrundlage und vorhergehender Pfropfauflage zugegeben werden.

Die Pfropfcopolymerisate B haben in der Regel Teilchendurchmesser im Bereich von 50 bis 700 nm, bevorzugt im Bereich von 200 bis 500 nm. Unter Teilchendurchmesser wird der $d_{50}$-Wert der integralen Massenverteilung verstanden.

Es können auch Mischungen von Pfropfcopolymerisaten unterschiedlicher Teilchengröße als Komponente B verwendet werden. In einer bevorzugten Ausführungsform wird eine Mischung aus zwei Pfropfcopolymerisaten mit Teilchendurchmessern ($d_{50}$-Wert der integralen Massenverteilung) von 50 bis 180 nm und 200 bis 700 nm im Gewichtsverhältnis von 70:30 bis 30:70 eingesetzt.

Der chemische Aufbau der beiden Pfropfcopolymerisate dieser Ausführungsform ist vorzugsweise gleich, obwohl die Pfropfauflage des grobteiligen Pfropfcopolymerisates bevorzugt zweistufig aufgebaut ist.

Komponente C

Als Komponente C enthalten die erfindungsgemäßen Formmassen von 1 bis 93,9, bevorzugt von 2,5 bis 89,5 Gew.-%, bezogen auf die Summe der Komponenten A bis F, mindestens eines Copolymerisates.

Besonders bevorzugte erfindungsgemäße Formmassen enthalten von 3 bis 86,9 Gew.-%, bezogen auf die Summe

der Komponenten A bis F, an Komponente C.

Gemäß der Erfindung sind die Copolymerisate C aufgebaut aus mindestens einer vinylaromatischen Verbindung, mindestens einem Alkylacrylat oder Alkylalkylacrylat oder deren Mischungen (Komponente $c_1$).

Die vinylaromatische Verbindung hat die allgemeine Formel I

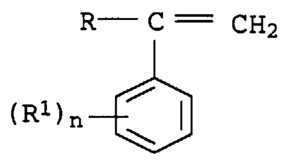

(I).

Darin bedeutet der Rest R ein Wasserstoffatom oder einen $C_1$- bis $C_8$-Alkylrest, worunter $C_1$- bis $C_4$-Alkyl bevorzugt ist. Besonders bevorzugt ist R ein Wasserstoffatom oder eine Methylgruppe. Unabhängig von R bedeutet $R^1$ einen $C_1$- bis $C_8$-Alkylrest, bevorzugt einen $C_1$- bis $C_4$-Alkylrest, insbesondere Methyl. Die Variable n ist eine ganze Zahl von Null bis 3. Bevorzugt ist n 0 oder 1. Die Alkylacrylate haben erfindungsgemäß einen Alkylrest mit 1 bis 8 C-Atomen, bevorzugt 1 bis 4 C-Atomen. Besonders bevorzugt wird Methylacrylat eingesetzt. Die als Komponente $c_1$ geeigneten Alkylalkylacrylate sind $C_1$- bis $C_8$-Alkyl-$C_1$- bis $C_8$-alkylacrylat. Besonders bevorzugt wird Methylmethacrylat eingesetzt.

Die, die Komponente C aufbauenden, Comonomeren $c_2$ sind Acrylnitril oder $C_1$- bis $C_8$-Alkylacrylnitril, bevorzugt $C_1$- bis $C_4$-Alkylnitril oder deren Mischungen. Bevorzugte Comonomeren $c_2$ sind Acrylnitril oder Methacrylnitril oder deren Mischungen.

Bevorzugt ist die Komponente C aufgebaut aus 50 bis 95 Gew.-%, insbesondere 60 bis 80 Gew.-% $c_1$ und entsprechend 5 bis 50 Gew.-%, insbesondere 20 bis 40 Gew.-% $c_2$.

Besonders bevorzugte Copolymerisate C sind solche aus Styrol mit Acrylnitril, aus Styrol mit Acrylnitril und Methylacrylat, aus $\alpha$-Methylstyrol mit Acrylnitril oder aus $\alpha$-Methylstyrol mit Acrylnitril und Methylmethacrylat. Es können auch mehrere unterschiedliche Copolymerisate C gleichzeitig eingesetzt werden.

Die Copolymerisate C sind ansich bekannt oder lassen sich nach ansich bekannten Methoden herstellen. Sie lassen sich z.B. durch radikalische Polymerisation, insbesondere durch Emulsions-, Suspensions-, Lösungs- oder Massepolymerisaten herstellen. Solche Copolymerisate entstehen auch häufig als Nebenprodukte bei der Pfropfcopolymerisation zur Herstellung der Komponente B, besonders dann, wenn große Mengen Monomere auf kleine Mengen Kautschuk gepfropft werden.

Die Copolymerisate C weisen Viskositätszahlen im Bereich von 40 bis 160 auf. Dies entspricht mittleren Molekulargewichten $M_w$ (Gewichtsmittelwert) im Bereich von 40 000 bis 2 000 000 g/mol.

Komponente D

Als Komponente D enthalten die erfindungsgemäßen Formmassen von 0,01 bis 10 Gew.-% mindestens eines Polyhydroxyethers aus mindestens einem aliphatischen oder aromatischen Diol und Epihalogenhydrin. Bevorzugte erfindungsgemäße Formmassen enthalten bis zu 8 Gew.-% der Komponente D. Besonders bevorzugt ist die Komponente D in Mengen von 0,05 bis 5, insbesondere von 0,1 bis 3 Gew.-%, in den erfindungsgemäßen Formmassen enthalten. Ganz besonders bevorzugte erfindungsgemäße Formmassen enthalten die Komponente D in Mengen von 1 Gew.-% oder darunter, beispielsweise in Mengen von 0,1 bis 0,9 Gew.-%. Die vorgenannten Gewichtsprozentangaben beziehen sich jeweils auf die Summe der Komponenten A bis F.

Die Polyhydroxyether, die als Komponente D eingesetzt werden können, sind Kondensationsprodukte aus aliphatischen oder aromatischen Diolen mit Epihalogenhydrin. Bei den aliphatischen Diolen sind Diole mit 2 bis 10 C-Atomen, beispielsweise 1,2-Propandiol, 1,3-Propandiol, 1,4-Butandiol, 2,4-Pentandiol, 1,5-Pentandiol, 1,2-Hexandiol, 1,5-Hexandiol oder 1,6-Hexandiol bevorzugt. Unter den aromatischen Diolen sind Bisphenole besonders geeignet.

Besonders bevorzugt wird Bisphenol A (2,2-Di(-(4-hydroxyphenyl)propan) verwendet. Anstelle von Bisphenol A können aber auch beispielsweise die zur Herstellung von Polycarbonaten geeigneten und unter A genannten Bisphenole eingesetzt werden. Als Epihalogenhydrin wird insbesondere Epichlorhydrin verwendet. Besonders bevorzugt sind Polyhydroxyether aus Bisphenol A und Epichlorhydrin. Daneben zählen Polyhydroxyether auf der Basis von Bisphenol S (Di-4,4'-hydroxyphenylsulfon) zu den besonders bevorzugten Komponenten D.

Die Polyhydroxyether haben im allgemeinen mittlere Molekulargewichte (Gewichtsmittelwert $M_w$ bestimmt mittels Gelpermeationschromatographie in Tetrahydrofuran gegen Polystyrolstandards) im Bereich von 10 000 bis 150 000, bevorzugt von 15 000 bis 120 000 g/mol.

Die Polyhydroxyether D sind ansich bekannt oder nach bekannten Verfahren erhältlich.

Komponente E

Die als Komponente E einsetzbaren halogenfreien Phosphorverbindungen sind in den erfindungsgemäßen Formmassen in Mengen von 0 bis 25, bevorzugt von 0 bis 20 Gew.-%, bezogen auf die Summe der Komponenten A bis F enthalten. Besonders bevorzugte erfindungsgemäße Formmassen enthalten von 2 bis 15 Gew.-% mindestens einer halogenfreien Phosphorverbindung.

Im allgemeinen können unterschiedlichste halogenfreie Phosphorverbindungen eingesetzt werden. Bevorzugt werden Phosphorverbindungen der allgemeinen Formel IV

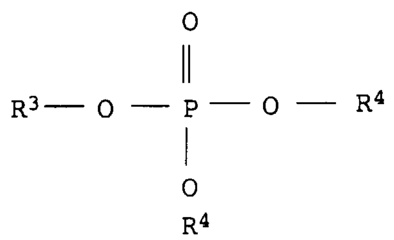

(IV)

in der $R^3$, $R^4$ und $R^5$ unabhängig voneinander halogenfreie $C_1$- bis $C_8$-Alkylgruppen oder halogenfreie $C_6$- bis $C_{20}$-Arylgruppen, die ein- bis zweifach durch $C_1$- bis $C_4$-Alkylgruppen substituiert sein können, bedeuten.

Bevorzugt sind Verbindungen, in denen mindestens zwei der Reste $R^3$, $R^4$ und $R^5$ gleich sind. Die Verwendung von aromatischen Phosphaten, insbesondere von Phosphaten der allgemeinen Formel II, in denen die Reste für Phenyl- und Kresylgruppen, die ihrerseits auch ein- bis zweifach, vorzugsweise durch Methyl-, Ethyl- oder Isopropylgruppen substituiert sein können, stehen, ist bevorzugt.

Als besonders geeignete Phosphorverbindungen der allgemeinen Formel II lassen sich beispielsweise Tri-(2,6-dimethylphenyl)-phosphat, Triphenylphosphat, Trikresylphosphat, Diphenyl-2-ethyl-kresylphosphat, Diphenyl-kresylphosphat und Tri-(isopropylphenyl)-phosphat nennen.

Es können auch Mischungen der obengenannten Phosphate mit beispielsweise Triphenylphosphinoxid oder Tri-(2,6-dimethylphenyl)-phosphinoxid eingesetzt werden.

Weiterhin sind Phosphate wie Phosphorsäure-bis-phenyl-(4-phenylphenyl)-ester, Phosphorsäure-phenyl-bis-(4-phenylphenyl)-ester, Phosphorsäure-tris-(4-phenylphenyl)-ester, Phosphorsäure-bis-phenyl-(benzylphenyl)-ester, Phosphorsäure-phenyl-bis-(benzylphenyl)-ester, Phosphorsäure-tris-(benzylphenyl)-ester, Phosphorsäure-phenyl-bis[1-phenylethyl)-phenyl]-ester, Phosphorsäure-phenyl-bis-[1-methyl-1-phenylethyl)-phenyl]-ester und Phosphorsäurephenyl-bis[4-(1-phenylethyl)-2,6-dimethylphenyl]-ester geeignet.

Daneben seien Resorcinoldiphosphat, höhere Oligomere von Resorcinoldiphosphat, Hydrochinondiphosphat und dessen Oligomere als Beispiele geeigneter halogenfreier Phosphorverbindungen genannt.

Komponente F

Als Komponente F können die erfindungsgemäßen thermoplastischen Formmassen von 0 bis 50 Gew.-%, insbesondere 0,05 bis 45 Gew.-% faser- oder teilchenförmige Füllstoffe oder deren Mischungen enthalten. Dabei handelt es sich vorzugsweise um kommerziell erhältliche Produkte. Verarbeitungshilfsmittel und Stabilisatoren wie UV-Stabilisatoren, Schmiermittel, Phosphorstabilisatoren und Antistatika werden üblicherweise in Mengen von 0,01 bis 5 Gew.-% verwendet, Verstärkungsmittel wie Kohlenstoffasern oder Glasfasern hingegen von 5 bis 40 Gew.-%.

Besonders bevorzugt als Komponente F sind Kohlenstoffasern und insbesondere Glasfasern.

Die verwendeten Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 $\mu$m. Es können sowohl Endlosfasern (rovings) als auch Schnittglasfasern mit einer Länge von 1 bis 10 mm, vorzugsweise 3 bis 6 mm, eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Außerdem seien Metallflocken (z.B. Aluminiumflocken der Fa. Transmet Corp.), Metallpulver, Metallfasern, metallbeschichtete Füllstoffe (z.B. nickelbeschichtete Glasfasern) sowie andere Zuschlagsstoffe, die elektromagnetische Wellen abschirmen, genannt. Insbesondere kommen Al-Flocken (K 102 der Fa. Transmet) für EMI-Zwecke (electromagnetic interference) in Betracht; ferner Abmischungen dieser Masse mit zusätzlichen Kohlenstoffasern, Leitfähigkeitsruß oder nickelbeschichteten C-Fasern.

Die erfindungsgemäßen Formmassen können ferner weitere Zusatzstoffe enthalten, die für Polycarbonate, SAN-Polymerisate und Pfropfmischpolymerisate auf Basis von ASA oder ABS oder deren Mischungen typisch und

gebräuchlich sind. Als solche Zusatzstoffe seien beispielsweise genannt: Farbstoffe, Pigmente, Antistatika, Antioxidantien und insbesondere Schmiermittel, die für die Weiterverarbeitung der Formmasse, z.B. bei der Herstellung von Formkörpern bzw. Formteilen erforderlich sind. Zu typischen Zusatzstoffen zählen auch Antitropfmittel, worunter insbesondere Teflon, das bevorzugt dispergiert in Wasser eingesetzt wird, zu nennen ist.

Die Herstellung der erfindungsgemäßen thermoplastischen Formmassen erfolgt durch Mischen der Komponenten. Es kann vorteilhaft sein, einzelne Komponenten vorzumischen. Auch das Mischen der Komponenten in Lösung und Entfernen der Lösungsmittel ist möglich.

Geeignete organische Lösungsmittel für die Komponenten A bis E und die löslichen Zusatzstoffe der Gruppe F sind beispielsweise Chlorbenzol, Gemische aus Chlorbenzol und Methylenchlorid oder Gemische aus Chlorbenzol und aromatischen Kohlenwasserstoffen, z.B. Toluol.

Das Eindampfen der Lösungsmittelgemische kann beispielsweise in Eindampfextrudern erfolgen.

Das Mischen der z.B. trockenen Komponenten A, B, C, D, E und gegebenenfalls F kann nach allen bekannten Methoden erfolgen. Vorzugsweise geschieht jedoch das Mischen der Komponenten A, B, C, D,E und gegebenenfalls F bei Temperaturen von 200 bis 320°C durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind.

Als Mischaggregate sind beispielsweise übliche Taumel- oder Rührwerksmischer zu nennen.

Geeignete Aggregate für die Schmelzcompoundierung sind beispielsweise diskontinuierlich arbeitende, beheizte Innenkneter mit oder ohne Stempel, kontinuierlich arbeitende Innenkneter, Schneckenkneter mit axial oszillierenden Schnecken. Zweiwellenextruder sowie Mischwalzwerke mit beheizten Walzen.

Für die Schmelzextrusion sind beispielsweise Ein- oder Zweiwellenextruder besonders geeignet.

Die erfindungsgemäßen thermoplastischen Formmassen können nach den bekannten Verfahren der Thermoplastverarbeitung bearbeitet werden, also z.B. durch Extrudieren, Spritzgießen, Kalandrieren, Hohlkörperblasen, Pressen oder Sintern.

Die erfindungsgemäßen Formmassen sind thermoplastisch verarbeitbar. Sie zeichnen sich durch ihre guten Kerbschlagzähigkeiten bei tiefen Temperaturen aus. Außerdem neigen sie nur bei großen Stoßbeanspruchungen zur Bildung von Rissen. Darüberhinaus sind die erfindungsgemäßen Formmassen hinreichend fließfähig, um schnelle Cycluszeiten bei der Herstellung von Formteilen zu gewährleisten. Insbesondere zeichnen sich die erfindungsgemäßen Formmassen durch ihre Flammresistenz aus.

Beispiele

Anwendungstechnische Prüfungen

Die Teilchengrößen (Gewichtsmittelwerte $d_{50}$) wurden mittels einer analytischen Ultrazentrifuge entsprechend der in W. Scholtan, H. Lange, Kolloid-Z. und Z.-Polymere 250 (1972) Seiten 782 bis 796 beschriebenen Methode bestimmt.

Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Masseverteilung bezeichnet wird, ist dabei als der Wert definiert, bei dem 50 Gew.-% der Teilchen einen kleineren und 50 Gew.-% der Teilchen einen größeren Durchmesser als der $d_{50}$-Wert aufweisen. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient $Q = (d_{90} - d_{10})/d_{50}$ stellt ein Maß für die Verteilungsbreite der Teilchengröße dar.

Die Herstellung der Probekörper erfolgte bei einer Massetemperatur von 260°C und einer Werkzeugtemperatur von 80°C.

Ein Maß für die Beständigkeit gegen Rißbildung bei Stoßbeanspruchung ist die Schädigungsarbeit $W_s$. Hierzu wurden gemäß DIN 53 443 Rundschreiben (60x2 mm) dem Durchstoßversuch ausgesetzt. Diese Stoßversuche wurden bei 23°C durchgeführt.

Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an Normkleinstäben ermittelt.

Die Fließfähigkeit der Formmassen wurde nach DIN 53 735 bei einer Temperatur von 260°C und 5 kg Belastung bestimmt.

Die Kerbschlagzähigkeiten ($a_k$ [kJ/m$^2$]) wurden bei den angegebenen Temperaturen gemäß ISO 179/1eA an gespritzten und anschließend gefrästen (A-Kerbe) Iso-Stäben gemessen.

Die Schlagzähigkeiten ($a_n$ [kJ/m$^2$]) wurden nach ISO 179/1eU (bei -40°C an gespritzten Normalkleinstäben gemessen. Angegeben ist jeweils der Mittelwert aus der Prüfung von 10 Proben je Probenserie.

Die Prüfung der Flammwidrigkeit erfolgte im vertikalen Brandtest nach den Vorschriften der Underwriter Laboratories (UL 94). Die Prüfung wurde an jeweils 5 Proben der Abmessungen 127 mm x 12,7 mm x 1,7 mm durchgeführt. Jeder Probekörper wurde je zweimal einer offenen Flamme ausgesetzt, bei allen Proben wurde die Nachbrenndauer bei jeder Beflammung gemessen. Als Gesamtbrandzeit ($t_{ges}$) wurde die Summe der Nachbrenndauer dieser insgesamt 10 Beflammungen bezeichnet.

Es wurden folgende Komponenten eingesetzt:

A1:

Ein handelsübliches Polycarbonat auf der Basis von Bisphenol A und einer relativen Lösungsviskosität von $\eta_{rel}$ = 1,3 ml/g (Viskositätszahl VZ = 61 ml/g), gemessen an einer 0,5 gew.-%igen Lösung in Dichlormethan bei 23°C.

A2:

Polycarbonat-Recyclat aus der Plattenextrusion, erhalten durch Mahlen von Randabschnitten und anschließendem Granulieren, charakterisiert durch eine relative Lösungsviskosität $\eta_{rel}$ = 1,31 ml/g (VZ = 62,5 ml/g), gemessen an einer 0,5 gew.-%igen Lösung in Dichlormethan bei 23°C.

B1:

Ein feinteiliges Pfropfcopolymerisat, hergestellt aus:

$\beta_1$) 16 g n-Butylacrylat und 0,4 g Tricyclodecenylacrylat, die in 150 g Wasser unter Zusatz von 1 g des Natriumsalzes einer $C_{12}$-$C_{18}$-Paraffinsulfonsäure, 0,3 g Kaliumpersulfat, 0,3 g Natriumhydrogencarbonat und 0,15 g Natriumpyrophosphat unter Rühren auf 60°C erwärmt wurden. Nach dem Anspringen der Polymerisationsreaktion wurden innerhalb von 3 Stunden eine Mischung aus 82 g n-Butylacrylat und 1,6 g Tricyclodecenylacrylat zugegeben. Nach Beendigung der Monomerzugabe wurde noch eine Stunde gerührt. Der erhaltene Latex des vernetzten Butylacrylat-Polymerisats hatte einen Feststoffgehalt von 40 Gew.-%, die mittlere Teilchengröße ($d_{50}$-Wert)wurde zu 76 nm ermittelt und die Teilchengrößenverteilung war eng (Quotient Q = 0,29).

$\beta_2$) 150 g des nach $\beta_1$) erhaltenen Polybutylacrylat-Latex wurden mit 40 g einer Mischung aus Styrol und Acrylnitril (Gewichtsverhältnis 75:25) und 60 g Wasser gemischt und unter Rühren nach Zusatz von weiteren 0,03 g Kaliumpersulfat und 0,05 g Lauroylperoxid 4 Stunden auf 65°C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des Pfropfcopolymerisats betrug 35 %, die mittlere Teilchengröße ($d_{50}$-Wert) 91 nm.

B2:

Ein grobteiliges Pfropfcopolymerisat, hergestellt aus:

$\beta_3$) Zu einer Vorlage aus 1,5 g des nach $\beta_1$) hergestellten Latex wurden nach Zugabe von 50 g Wasser und 0,1 g Kaliumpersulfat im Verlauf von 3 Stunden einerseits eine Mischung aus 49 g n-Butylacrylat und 1 g Tricyclodecenylacrylat und andererseits eine Lösung von 0,5 g des Natriumsalzes einer $C_{12}$-$C_{18}$-Paraffinsulfonsäure in 25 g Wasser bei 60°C zugegeben. Anschließend wurde 2 Stunden nachpolymerisiert. Der erhaltene Latex des vernetzten Butylacrylat-Polymerisats hatte einen Feststoffgehalt von 40 %. Die mittlere Teilchengröße ($d_{50}$-Wert) wurde zu 430 nm ermittelt, die Teilchengrößenverteilung war eng (Q = 0,1).

$\beta_4$) 150 g des nach $\beta_3$) hergestellten Latex wurden mit 20 g Styrol und 60 g Wasser gemischt und unter Rühren nach Zusatz von weiteren 0,03 g Kaliumpersulfat und 0,05 g Lauroylperoxid 3 Stunden auf 65°C erhitzt. Die bei dieser Pfropfmischpolymerisation erhaltene Dispersion wurde dann mit 20 g eines Gemisches aus Styrol und Acrylnitril im Gewichtsverhältnis 75:25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfcopolymerisats wurde zu 35 % ermittelt; die mittlere Teilchengröße der Latexteilchen ($d_{50}$-Wert) betrug 510 nm.

B3:

Pfropfcopolymerisat auf Polybutadienbasis

Ein Pfropfcopolymerisat, hergestellt durch Polymerisation von 60 g Butadien in Gegenwart einer Lösung von 0,6 g t-Dodecylmercaptan, 0,7 g $C_{14}$-Na-Alkylsulfonat als Emulgator, 0,2 g Kaliumperoxiddisulfat und 0,2 g Natriumpyrophosphat in 80 g Wasser bei 65°C. Nach Beendigung der Reaktion wurde der Polymerisationsautoklav entspannt. Der Umsatz betrug 98 %.

Es wurde ein Polybutadienlatex erhalten, dessen mittlere Teilchengröße bei 100 nm lag. Dieser wurde durch

Zusatz von 25 g einer Emulsion aus einem Copolymeren aus 96 g Ethylacrylat und 4 g Methacrylsäureamid mit einem Feststoffgehalt von 10 Gewichtsteilen agglomeriert, wobei ein Polybutadienlatex mit einer mittleren Teilchengröße von 350 nm entstand. Nach dem Zusatz von 40 g Wasser, 0,4 g Na-$C_{14}$-Alkylsulfonat und 0,2 Teilen Kaliumperoxodisulfat wurden 40 g einer Mischung aus Styrol und Acrylnitril im Gewichtsverhältnis von 70:30 innerhalb von 4 Stunden zugeführt. Die Polymerisation erfolgte erfolgte unter Rühren des Ansatzes bei 75°C. Der Umsatz bezogen auf Styrol-Acrylnitril war praktisch quantitativ. Die erhaltene Pfropfkautschukdispersion wurde mittels Calciumchloridlösung gefällt und das abgetrennte Pfropfcopolymerisat mit destilliertem Wasser gewaschen.

C1:
Ein Copolymerisat aus Styrol und Acrylnitril im Gew.-Verhältnis 75:25 mit einer Viskositätszahl von 82 ml/g (gemessen an einer 0,5 gew.-%igen Lösung in Dimethylformamid bei 23°C), hergestellt durch kontinuierliche Lösungspolymerisation nach einem Verfahren wie es beispielsweise im Kunststoff-Handbuch, Vieweg-Daumiller, Band V (Polystyrol), Carl-Hanser-Verlag, München 1969, Seite 124, Zeilen 12ff, beschrieben ist.

C2:
Ein Copolymerisat aus Styrol und Acrylnitril im Gew.-Verhältnis 80:20 mit einer Viskositätszahl von 83 ml/g (gemessen an einer 0,5 gew.-%igen Lösung in Dimethylformamid bei 23°C), hergestellt durch kontinuierliche Lösungspolymerisation nach einem Verfahren wie es beispielsweise im Kunststoff-Handbuch, Vieweg-Daumiller, Band V (Polystyrol), Carl-Hanser-Verlag, München 1969, Seite 124, Zeilen 12ff, beschrieben ist.

D1:
Ein Kondensationsprodukt aus Bisphenol A und Epichlorhydrin mit einer relativen Viskosität von 1,13, gemessen an einer 0,5 gew.-%igen Lösung in $CH_2Cl_2$ bei 25°C (z.B. Phenoxy® der Firma Union Carbide).

E1:
Triphenylphosphat

E2:
Resorcinoldiphenylphosphat

F1:
Ein hochmolekularer Mehrkomponentenester auf Fettsäurebasis mit einer Viskosität von 110 bis 150 mPa.s (bei 80°C) als Schmiermittel (z.B. Loxiol® G 70 S der Firma Henkel).

Herstellung der Formmassen

Die Komponenten A bis F wurden auf einem Zweiwellenextruder (ZSK 30 der Fa. Werner & Pfleiderer) bei 250 bis 280°C gemischt, als Strang ausgetragen, gekühlt und granuliert.

Das getrocknete Granulat wurde bei 250 bis 280°C zu Rundscheiben, Normkleinstäben, ISO-Prüfkörpern sowie Flachstäben für die UL-94 Prüfung verarbeitet.

Die Zusammensetzungen und Eigenschaften der Formmassen sind den Tabellen zu entnehmen.

Tabelle 1

| Formmassen, die ein Polycarbonat und ein feinteiliges Pfropfcopolymerisat enthalten | | | |
|---|---|---|---|
| Formmasse Nr. | V1 | 1 | 2 |
| Komponente [Gew.-%] | | | |
| A1 | 64,3 | 63,6 | 62,1 |
| B1 | 8 | 7,9 | 7,7 |
| C1 | 16 | 15,8 | 15,5 |
| D1 | - | 1 | 3 |
| E1 | 11 | 11 | 11 |
| F1 | 0,3 | 0,3 | 0,3 |
| F2 | 0,4 | 0,4 | 0,4 |
| Eigenschaften | | | |
| $a_k$ [kJ/$m^2$] | 11 | 13 | 13 |
| $a_n$ (-40°C) [kJ/$m^2$] | 274 | 310 | 334 |
| Ws [Nm] | 42 | 45 | 46 |
| MVJ [ml/10'] | 39 | 43 | 45 |
| $t_{ges}$ [s] | 46 | 39 | 31 |
| V: Vergleichsversuche | | | |

Tabelle 2

| Formmassen, die ein Polycarbonat und Pfropfcopolymerisat unterschiedlicher Teilchengröße enthalten | | | | | | | | | | |
|---|---|---|---|---|---|---|---|---|---|---|
| Formmasse Nr. | V2 | 3 | 4 | V3 | 5 | V4 | 6 | 7 | V5 | 8 |
| Komponente [Gew.-%] | | | | | | | | | | |
| A1 | 60 | 59,4 | 58,2 | 64,3 | 62,1 | 75,3 | 75,3 | 75,3 | 75,3 | 72,9 |
| B1 | 10 | 9,9 | 9,7 | 4 | 3,85 | 4,4 | 4,4 | 4,4 | 4 | 3,9 |
| B2 | 10 | 9,9 | 9,7 | 4 | 3,85 | 4,4 | 4,4 | 4,4 | 4 | 3,9 |
| C1 | 19,5 | 19,3 | 18,9 | 16 | 15,5 | 4,4 | 3,4 | 3 | 10 | 9,6 |
| D1 | - | 1 | 3 | - | 3 | - | 1 | 3 | - | 3 |
| E1 | - | - | - | - | - | 10,9 | 10,9 | 10,9 | - | - |
| E2 | - | - | - | 11 | 11 | - | - | - | 6 | 6 |
| F1 | 0,5 | 0,5 | 0,5 | 0,3 | 0,3 | 0,24 | 0,24 | 0,24 | 0,3 | 0,3 |
| F2 | - | - | - | 0,4 | 0,4 | 0,36 | 0,36 | 0,36 | 0,4 | 0,4 |
| Eigenschaften | | | | | | | | | | |
| $a_k$ [kJ/m$^2$] | 30 | 31 | 31 | 10 | 12 | 8,2 | 9,7 | 8,9 | 39 | 41 |
| $a_n$ (-40°C) [kJ/m$^2$] | 280 | 294 | 305 | 275 | 300 | 295 | 310 | 315 | 280 | 310 |
| Vicat B [°C] | 115 | 118 | 122 | n.g. | n.g. | 93 | 96 | 98 | n.g. | n.g. |
| $W_s$ [Nm] | 57 | 56 | 59 | 39 | 45 | 47 | 45 | 46 | 43 | 45 |
| MVI [ml/10'] | 13 | 13 | 12,2 | 41 | 47 | 47 | 47 | 46 | 22 | 25 |
| $t_{ges}$ [s] | n.g. | n.g. | n.g. | 56 | 35 | n.g. | n.g. | n.g. | 111 | 67 |
| V: Vergleichsversuch n.g.: nicht gemessen | | | | | | | | | | |

Tabelle 3

| Formmassen, die ein Polycarbonat und Pfropfcopolymerisat B3 enthalten | | | | | |
|---|---|---|---|---|---|
| Formmasse Nr. | V6 | 9 | V7 | 10 | 11 |
| Komponente [Gew.-%] | | | | | |
| A1 | 65 | 65 | 64,8 | 64,0 | 61,9 |
| B3 | 17,5 | 17,5 | 8 | 7,9 | 7,6 |
| C1 | 17 | 14 | 14 | 13,9 | 13,3 |
| D1 | - | 3 | - | 1 | 4 |
| E1 | - | - | - | - | - |
| E2 | - | - | 12,5 | 12,5 | 12,5 |
| F1 | 0,5 | 0,5 | 0,3 | 0,3 | 0,3 |
| F2 | - | - | 0,4 | 0,4 | 0,4 |
| Eigenschaften | | | | | |
| $a_K$ [kJ/m$^2$] | 34 | 33 | 15 | 18 | 19 |
| $W_s$ [Nm] | 56 | 55 | 43 | 45 | 45 |
| Vicat B [°C] | 116 | 120 | n.g. | n.g. | n.g. |
| MVJ [ml/10'] | 11,0 | 11,2 | 34 | 36 | 40 |
| $t_{ges}$ [s] | n.g. | n.g. | 110 | 90 | 69 |
| V: Vergleichsversuch | | | | | |

Tabelle 4

| Formmassen, die ein Polycarbonat aus Extrusionsabfällen enthalten | | |
|---|---|---|
| Formmasse Nr. | V8 | 12 |
| Komponente [Gew.-5] | | |
| A1 | 48 | 48 |
| A2 | 12 | 11,4 |
| B1 | 10 | 9,9 |
| B2 | 10 | 9,9 |
| C1 | 19,5 | 19,3 |
| D1 | - | 1 |
| F1 | 0,5 | 0,5 |
| Eigenschaften | | |
| $a_k$ [kJ/$m^2$] | 59 | 62 |
| $a_n$ (-40°C) [kJ/$m^2$] | 295 | 311 |
| $W_s$ [Nm] | 65 | 61 |
| Vicat B [°C] | 120 | 121 |
| MVJ [ml/10'] | 11 | 12 |
| V: Vergleichsversuch | | |

**Patentansprüche**

1. Formmassen, enthaltend

A) 5 bis 97,9 Gew.-% mindestens eines Polycarbonates mit einem Molekulargewicht (Gewichtsmittelwert $M_w$) im Bereich von 10 000 bis 64 000 g/mol,

B) 1 bis 93,9 Gew.-% mindestens eines Pfropfcopolymerisates,

C) 1 bis 93,9 Gew.-% mindestens eines Copolymerisates aus

$c_{1)}$ mindestens einer vinylaromatischen Verbindung der allgemeinen Formel I

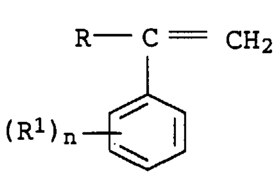

(I)

worin R ein Wasserstoffatom oder einen $C_1$- bis $C_8$-Alkylrest, $R^1$ einen $C_1$- bis $C_8$-Alkylrest und n eine ganze Zahl von 0 bis 3 bedeutet, eines $C_1$- bis $C_8$-Alkylacrylates, eines $C_1$- bis $C_8$-Alkyl-$C_1$- bis $C_8$-alkylacrylates oder deren Mischungen und

$c_{2)}$ Acrylnitril, $C_1$- bis $C_8$-Alkylacrylnitril oder deren Mischungen,

D) 0,01 bis 10 Gew.-% mindestens eines Polyhydroxyethers aus mindestens einem aliphatischen oder aromatischen Diol mit Epihalogenhydrin,

E) 0 bis 25 Gew.-% mindestens einer halogenfreien Phosphorverbindung und

F) 0 bis 50 Gew.-% Zusatzstoffe.

**2.** Formmassen nach Anspruch 1, in denen die Komponente A eine Mischung aus

$a_1$) 0 bis 95 Gew.-% mindestens eines Polycarbonates mit einem Molekulargewicht (Gewichtsmittelwert $M_w$) im Bereich von 10 000 bis 60 000 g/mol und
$a_2$) 5 bis 100 Gew.-% mindestens eines Polycarbonates mit einem Molekulargewicht (Gewichtsmittelwert $M_w$) im Bereich von 10 000 bis 60 000 g/mol aus Extrusionsabfällen ist.

**3.** Formmassen nach Anspruch 1 oder 2, in denen die Komponente B mindestens ein Pfropfcopolymerisat, aufgebaut aus

$b_1$) 40 bis 80 Gew.-% einer Pfropfgrundlage aus einem kautschukelastischen Polymeren mit einer Glasübergangstemperatur von unter 10°C und

$b_2$) 20 bis 60 Gew.-% einer Pfropfauflage aus

$b_{21}$) 50 bis 95 Gew.-% einer vinylaromatischen Verbindung der allgemeinen Formel I, $C_1$- bis $C_8$-Alkylacrylat oder $C_1$- bis $C_8$-Alkyl-$C_1$- bis $C_8$-alkylacrylat oder deren Mischungen und

$b_{22}$) 5 bis 50 Gew.-% Acrylnitril, $C_1$- bis $C_8$-Alkylacrylnitril, $C_1$- bis $C_8$-Alkyl-$C_1$- bis $C_8$-alkylacrylat oder deren Mischungen

ist.

**4.** Formmassen nach einem der Ansprüche 1 bis 3, in denen die Komponente D ein Polykondensat aus 2,2-Di(-4-hydroxyphenyl)propan und Epichlorhydrin ist.

**5.** Formmassen nach einem der Ansprüche 1 bis 4, in denen die Komponente E Triphenylphosphat, Resorcinoldiphosphat oder Hydrochinondiphosphat ist.

**6.** Formmassen nach einem der Ansprüche 1 bis 5, enthaltend

von 7,5 bis 94,9 Gew.-% der Komponente A,
von 2,5 bis 89,9 Gew.-% der Komponente B,
von 2,5 bis 89,9 Gew.-% der Komponente C,
von 0,1 bis 0,9 Gew.-% der Komponente D,
von 0 bis 20 Gew.-% der Komponente E und
von 0 bis 40 Gew.-% der Komponente F.

**7.** Verwendung der Formmassen nach einem der Ansprüche 1 bis 6 zur Herstellung von Formkörpern, Folien oder Fasern.

**8.** Formkörper, Folien oder Fasern, enthaltend Formmassen nach einem der Ansprüche 1 bis 6.

**9.** Verwendung von Polyhydroxyethern aus mindestens einem aliphatischen oder aromatischen Diol und Epihalogenhydrin als Hilfsstoff in Flammschutzmitteln auf der Basis halogenfreier Phosphorverbindungen.

**10.** Flammschutzmittel enthaltend 0,01 bis 10 Gew.-% mindestens eines Polyhydroxyethers aus mindestens einem aliphatischen oder aromatischen Diol und Epihalogenhydrin und 90 bis 99,99 Gew.-% mindestens einer halogenfreien Phosphorverbindung.